# EUROPEAN PATENT SPECIFICATION

(11) **EP 3 012 954 B1**
(45) Date of publication and mention of the grant of the patent: **16.08.2017**
(21) Application number: 15191295.3
(22) Date of filing: 23.10.2015
(51) Int. Cl.: H02M 1/40, H02M 3/337

(54) **MAGNETIZATION BALANCING METHOD**
MAGNETISIERUNGS-AUSGLEICHSVERFAHREN
PROCÉDÉ D'ÉQUILIBRAGE DE MAGNÉTISATION

(30) Priority: 24.10.2014 US 201414523745
(43) Date of publication of application: 27.04.2016
(73) Proprietor: Keithley Instruments, Inc., Cleveland OH 44139 (US)
(72) Inventor: GOEKE, Wayne, Hudson, OH 44236 (US)
(74) Representative: HGF Limited

(56) References cited:
- EP-A2- 1 369 982
- US-A- 4 553 198
- US-A1- 2014 192 560

## Description

### Technical Field

This disclosure relates generally to switching power supplies and, more particularly, to techniques for magnetization balancing with regard to such power supplies.

### Background

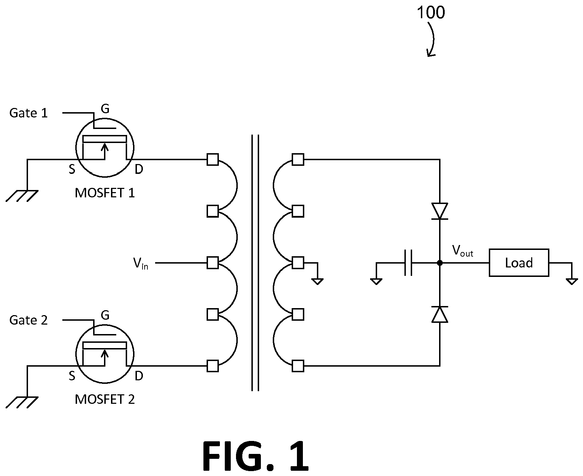

FIGURE 1 illustrates an example of a typical push-pull switching power supply 100. In the example, the switching power supply 100 includes two metal-oxide-semiconductor field-effect transistor (MOSFETs) (here, MOSFET 1 and MOSFET 2) and an output voltage (Vₒᵤₜ) at a load (Load). The gate of MOSFET 1 (Gate 1) is driven with a square wave and the gate of MOSFET 2 (Gate 2) is driven with an inversion of the square wave driving Gate 1.

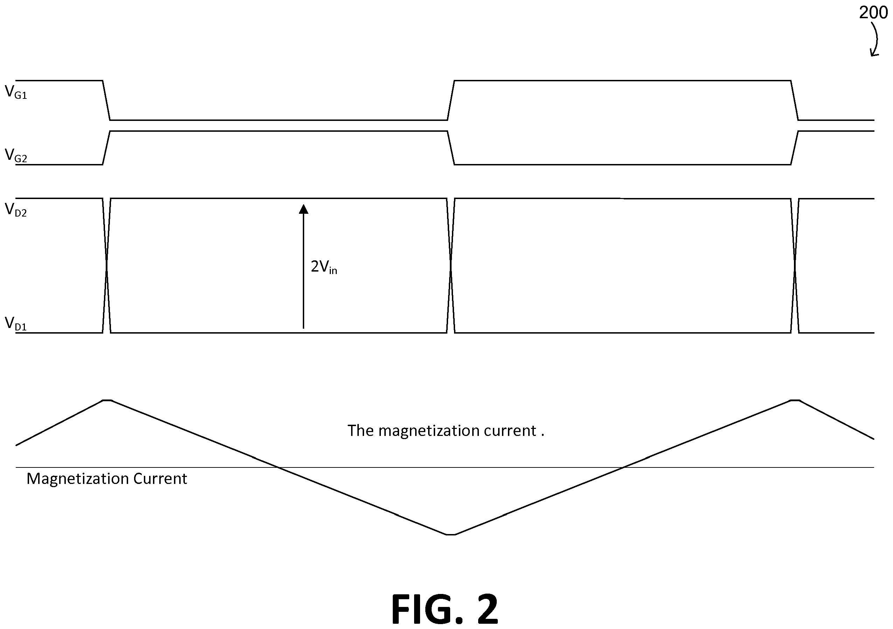

FIGURE 2 is a graphical representation 200 of the gate voltages (V_{G1} and V_{G2}, respectively) and drain voltages (V_{D1} and V_{D2}, respectively) of MOSFET 1 and MOSFET 2 and magnetization current (e.g., the time integration of the voltage applied across the transformer) corresponding to the power supply 100 illustrated by FIGURE 1.

A common problem a power supply design such as the power supply 100 illustrated by FIGURE 1 occurs when there is a small difference in the volt-seconds that are applied during the on-time of MOSFET 1 versus the volt-seconds that are applied during the on-time of MOSFET 2. The magnetization current will generally develop a DC component that will build until the resistive losses force the volt-seconds to be balanced, at which time the DC component stop increasing. If the resistive losses are small, the transformer will saturate, thus resulting in large magnetizing currents than can destroy either or both MOSFETs.

US2014192560 discloses a duty cycle balance module (DCBM) for use with a switch mode power converter. One possible half-bridge converter embodiment includes a transformer driven to conduct current in first and second directions by first and second signals during and second half-cycles, respectively. A current limiting mechanism adjusts the duty cycles of the first and second signals when a sensed current exceeds a predetermined limit threshold.; The DCBM receives signals representative of the duty cycles which would be used if there were no modification by the current limiting mechanism and signals representative of the duty cycles that are actually used for the first and second signals, and outputs signals which modify signals and as needed to dynamically balance the duty cycles of the first and second signals and thereby reduce flux imbalance in the transformer that might otherwise arise.

US4553198 discloses a pulse width modulated power converter having a single time multiplexed symmetry correction circuit operative to vary the pulse width of output drive pulses applied to an output transformer. It claims that as a result, the average current and thus the volt second product seen by each half of the transformer primary winding will be equal under steady state conditions. It further claims that the transformer drive remains balanced over the entire dynamic range to prevent unwanted saturation of the transformer core.

EP1369982 discloses an electric power conversion device comprising switching elements making up a push-pull converter, a pulse transformer, a rectification diode, a rectification diode, a choke coil, a smoothing capacitor, a DC magnetic deviation prevention means, and an inverter. The DC magnetic deviation prevention means detects the coil currents flowing in the primary windings of the pulse transformer. By controlling (shortening) the on time of the switching element having a greater amount of current, the coil currents are balanced, thereby preventing the magnetic deviation phenomena of the pulse transformer.

Accordingly, a need remains for magnetization balancing with particular regard to power supplies.

### Summary

Embodiments of the disclosed technology generally pertain to techniques for magnetization balancing for switching power supplies.

### Brief Description of the Drawings

FIGURE 1 illustrates an example of a typical push-pull switching power supply.
FIGURE 2 is a graphical representation of the MOSFET gate voltages and drain voltages as well as the magnetization current corresponding to the power supply illustrated by FIGURE 1.
FIGURE 3 illustrates an example of a push-pull switching power supply in accordance with certain embodiments of the disclosed technology.
FIGURE 4 is a first graphical representation of the MOSFET gate voltages and drain voltages as well as the magnetization current corresponding to a power supply in accordance with certain embodiments of the disclosed technology.
FIGURE 5 is a second graphical representation of the MOSFET gate voltages and drain voltages as well as the magnetization current corresponding to a power supply in accordance with certain embodiments of the disclosed technology.
FIGURE 6 illustrates an example of a method of magnetization balancing for a switching power supply in accordance with certain embodiments of the disclosed technology.

### Detailed Description

Implementations of the disclosed technology are generally directed to a balancing technique for switching power supplies.

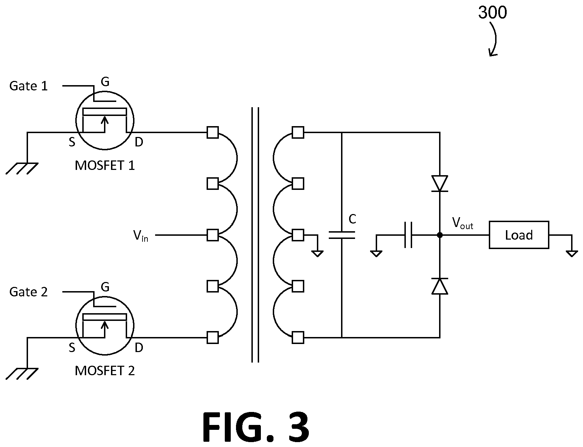

FIGURE 3 illustrates an example of a push-pull switching power supply 300 in accordance with certain embodiments of the disclosed technology. In the example, the gate of MOSFET 1 (Gate 1) is driven with a less-than-50% on pulse and the gate of MOSFET 2 (Gate 2) is driven with a second, equal pulse that is phase-shifted 180 degrees. During the time MOSFET 1 and MOSFET 2 are both off, the magnetizing current will cause the voltage on the transformer to commutate (i.e., flip voltage).

Adding capacitance (here, capacitor C) across the transformer allows the commutation slew rate to be slowed down/controlled. If the volt-seconds are not balanced, the magnetizing current will typically take on a DC component. This DC component will generally cause the one phase to commutate faster and the other to commutate slower. This will shift the volt-second mismatch toward a balance and stop the DC component from continuing to increase. If the gate drives have slow rise and fall times, the starting volt-second mismatch can be significant due to the variation of MOSFET threshold voltage. The result is generally a large difference between the commutation times.

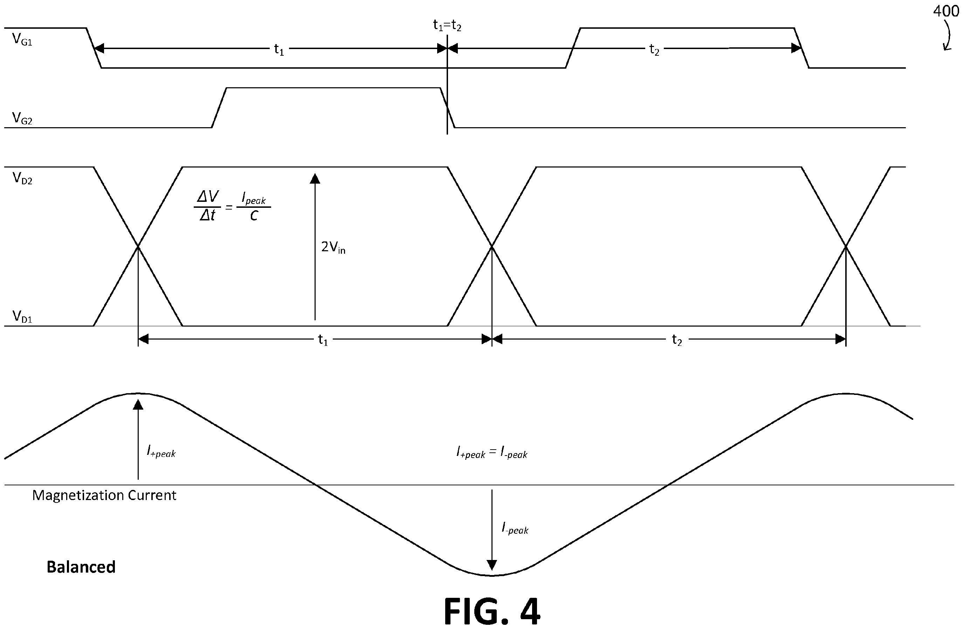

FIGURE 4 is a first graphical representation 400 of the MOSFET gate voltages and drain voltages as well as the magnetization current corresponding to a power supply, such as the push-pull switching power supply 300 illustrated by FIGURE 3, in accordance with certain embodiments of the disclosed technology. The gate drive has an off time between each on time to allow time for the magnetization current to commutate the drains. In the example, the commutation times (t₁ and t₂) are balanced (i.e., t₁ = t₂).

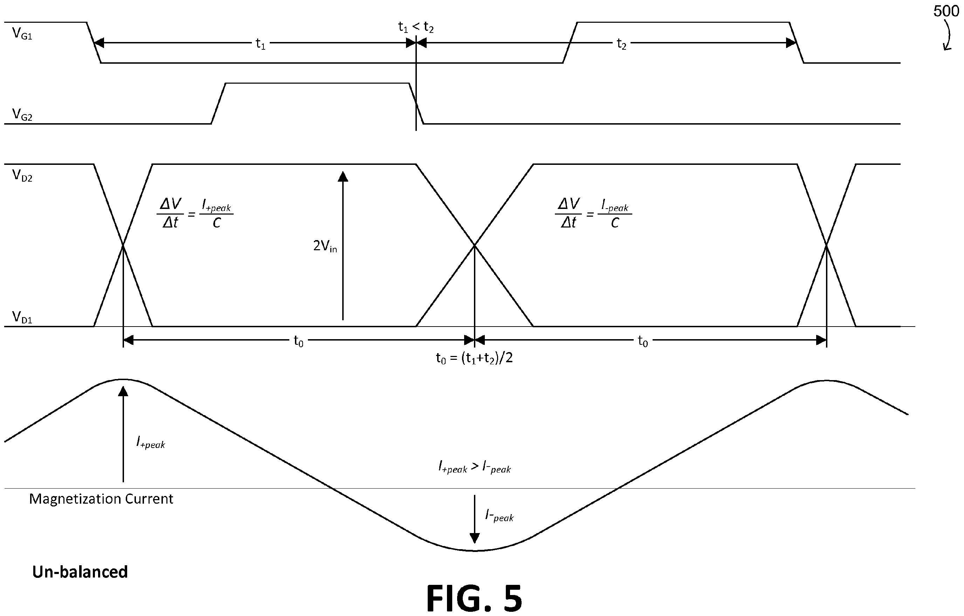

FIGURE 5 is a second graphical representation 500 of the MOSFET gate voltages and drain voltages as well as the magnetization current corresponding to a power supply, such as the push-pull switching power supply 300 illustrated by FIGURE 3, in accordance with certain embodiments of the disclosed technology. As with the example 400 illustrated by FIGURE 4, the gate drive has an off time between each on time to allow time for the magnetization current to commutate the drains. In the example, however, the commutation times (t₁ and t₂) are not balanced (e.g., t₁ < t₂).

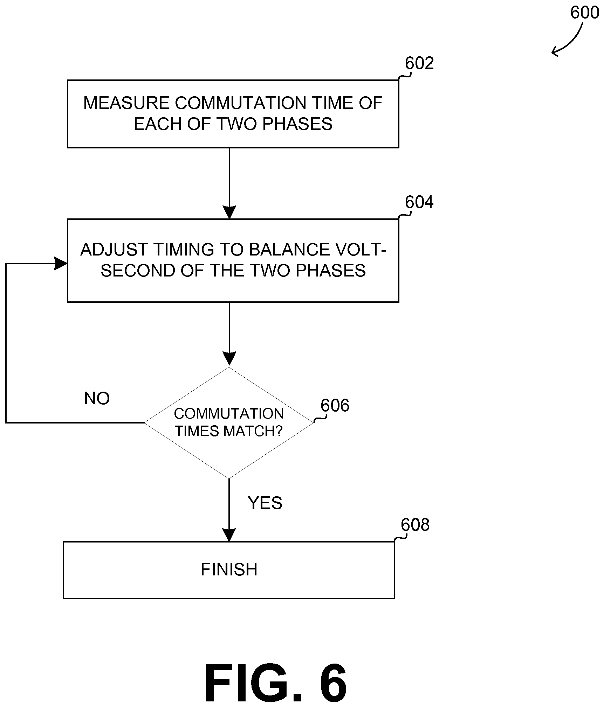

FIGURE 6 illustrates an example of a method 600 of magnetization balancing for a switching power supply, such as the push-pull switching power supply 300 illustrated by FIGURE 3, in accordance with certain embodiments of the disclosed technology.

At 602, the commutation time of the two phases corresponding to a power supply having two MOSFETs is measured. In the example, the gate of a first MOSFET will be referred to as Gate 1 and the gate of a second MOSFET will be referred to as Gate 2.

At 604, the timing (e.g., phase) of the on time (pulse width) of Gate 1 relative to the on time (pulse width) of Gate 2 is adjusted (e.g., incremented) in order to balance the volt-second of the two phases.

At 606, a determination is made as to whether the commutation times match (e.g., whether they are substantially equal to each other). If the commutation times match, the method ends as indicated by 608; if the commutation times do not match (e.g., one is larger than the other), the method returns to 604.

The following discussion is intended to provide a brief, general description of a suitable machine in which embodiments of the disclosed technology can be implemented. As used herein, the term "machine" is intended to broadly encompass a single machine or a system of communicatively coupled machines or devices operating together. Exemplary machines may include computing devices such as personal computers, workstations, servers, portable computers, handheld devices, tablet devices, and the like.

Typically, a machine includes a system bus to which processors, memory such as random access memory (RAM), read-only memory (ROM), and other state-preserving medium, storage devices, a video interface, and input/output interface ports can be attached. The machine may also include embedded controllers such as programmable or non-programmable logic devices or arrays, Application Specific Integrated Circuits (ASICs), embedded computers, smart cards, and the like. The machine may be controlled, at least in part, by input from conventional input devices such as keyboards and mice, as well as by directives received from another machine, interaction with a virtual reality (VR) environment, biometric feedback, or other pertinent input.

The machine may utilize one or more connections to one or more remote machines, such as through a network interface, modem, or other communicative coupling. Machines can be interconnected by way of a physical and/or logical network, such as an intranet, the Internet, local area networks, wide area networks, etc. One having ordinary skill in the art will appreciate that network communication may utilize various wired and/or wireless short range or long range carriers and protocols, including radio frequency (RF), satellite, microwave, Institute of Electrical and Electronics Engineers (IEEE) 545.11, Bluetooth, optical, infrared, cable, laser, etc.

Examples provide a method of magnetization balancing for a switching power supply of a type where the magnetization drives the commutations of the switching, the switching power supply having a first MOSFET and a second MOSFET, the first MOSFET having a gate and the second MOSFET having a gate, the method comprising measuring a first commutation time, measuring a second commutation time adjusting a timing of an on time (pulse width) of the gate of the first MOSFET relative to an on time (pulse width) of the gate of the second MOSFET, and determining whether the first commutation time is at least substantially equal to the second commutation time.

In some examples the method further comprises again adjusting the timing of the on time (pulse width) of the gate of the first MOSFET relative to the on time (pulse width) of the gate of the second MOSFET responsive to a determination that the first commutation time is not at least substantially equal to the second commutation time.

In some examples the method further comprises stopping the method responsive to a determination that the first commutation time is at least substantially equal to the second commutation time.

Examples provide a switching power supply operable to carry out any of the disclosed methods.

Having described and illustrated the principles of the invention with reference to illustrated embodiments, it will be recognized that the illustrated embodiments may be modified in arrangement and detail without departing from such principles, and may be combined in any desired manner. And although the foregoing discussion has focused on particular embodiments, other configurations are contemplated.

In particular, even though expressions such as "according to an embodiment of the invention" or the like are used herein, these phrases are meant to generally reference embodiment possibilities, and are not intended to limit the invention to particular embodiment configurations. As used herein, these terms may reference the same or different embodiments that are combinable into other embodiments.

Consequently, in view of the wide variety of permutations to the embodiments that are described herein, this detailed description and accompanying material is intended to be illustrative only, and should not be taken as limiting the scope of the invention. What is claimed as the invention, therefore, is all such modifications as may come within the scope of the following claims and equivalents thereto.

## Claims

1. A method of magnetization balancing for a switching power supply of a type where the magnetization drives the commutations of the switching, the switching power supply having a first MOSFET and a second MOSFET, the first MOSFET having a gate and the second MOSFET having a gate, the method comprising:
measuring a first commutation time;
measuring a second commutation time;
adjusting a timing of an on time (pulse width) of the gate of the first MOSFET relative to an on time (pulse width) of the gate of the second MOSFET;
determining whether the first commutation time is at least substantially equal to the second commutation time;
again adjusting the timing of the on time (pulse width) of the gate of the first MOSFET relative to the on time (pulse width) of the gate of the second MOSFET responsive to a determination that the first commutation time is not at least substantially equal to the second commutation time; and
stopping the method responsive to a determination that the first commutation time is at least substantially equal to the second commutation time.

2. A switching power supply adapted to carry out the method claim 1.

## Patentansprüche

1. Verfahren eines Magnetisierungsausgleichs für ein Schaltnetzteil eines Typs, bei dem die Magnetisierung die Schaltkommutierungen betreibt, wobei das Schaltnetzteil einen ersten MOSFET und einen zweiten MOSFET hat, wobei der erste MOSFET ein Gate hat und der zweite MOSFET ein Gate hat, wobei das Verfahren umfasst:
Messen einer ersten Kommutierungszeit;
Messen einer zweiten Kommutierungszeit;
Anpassen eines Timings einer Einschaltzeit (Pulsbreite) des ersten MOSFET-Gates bezogen auf eine Einschaltzeit (Pulsbreite) des zweiten MOSFET-Gates;
Ermitteln, ob die erste Kommutierungszeit mindestens im Wesentlichen gleich der zweiten Kommutierungszeit ist;
erneut Anpassen des Timings der Einschaltzeit (Pulsbreite) des ersten MOSFET-Gates bezogen auf die Einschaltzeit (Pulsbreite) des zweiten MOSFET-Gates als Reaktion auf eine Ermittlung, dass die erste Kommutierungszeit mindestens im Wesentlichen nicht gleich der zweiten Kommutierungszeit ist; und
Anhalten des Verfahrens als Reaktion auf eine Ermittlung, dass die erste Kommutierungszeit mindestens im Wesentlichen gleich der zweiten Kommutierungszeit ist.

2. Schaltnetzteil, das angepasst wird, den Verfahrensanspruch 1 auszuführen.

## Revendications

1. Procédé d'équilibrage de magnétisation pour une alimentation électrique à découpage d'un type dans lequel la magnétisation entraîne les commutations du découpage, ladite alimentation électrique à découpage possédant un premier transistor à effet de champ à grille métal oxyde (MOSFET) et un second MOSFET, ledit premier MOSFET possédant une grille et ledit second MOSFET possédant une grille, ledit procédé comprenant :
la prise de mesure d'un premier temps de commutation ;
la prise de mesure d'une second temps de commutation ;
le réglage d'une synchronisation du temps d'activation (largeur d'impulsion) de la grille du premier MOSFET par rapport à un temps d'activation (largeur d'impulsion) de la grille du second MOSFET ;
la détermination pour savoir si ledit premier temps de commutation est au moins sensiblement égal audit second temps de commutation ;
le réglage de nouveau de la synchronisation du temps d'activation (largeur d'impulsion) de la grille du premier MOSFET par rapport au temps d'activation (largeur d'impulsion) de la grille du second MOSFET en réponse à une détermination que ledit premier temps de commutation n'est pas au moins sensiblement égal audit second temps de commutation ; et
l'arrêt du procédé en réponse à une détermination que ledit premier temps de commutation est au moins sensiblement égal audit second temps de commutation.

2. Alimentation électrique à découpage conçue pour exécuter le procédé selon la revendication 1.
